# EUROPEAN PATENT APPLICATION

(11) **EP 2 128 945 A1**
(43) Date of publication of application: **02.12.2009**
(21) Application number: 08425380.6
(22) Date of filing: 27.05.2008
(51) Int. Cl.: H02G 1/00

(54) **Device for the application of electrical cases to a wall**

(71) Applicant: Cavallo, Carlo, 50058 Signa (Firenze) (IT); Rossi, Andrea, 50058 Signa (Firenze) (IT)
(72) Inventor: Cavallo, Carlo, 50058 Signa (Firenze) (IT); Rossi, Andrea, 50058 Signa (Firenze) (IT)
(74) Representative: Bardini, Marco Luigi

(57) **Abstract**

Device for the application of electrical cases to a wall, which comprises a frame (11) with attaching means (13) for the reversible attachment of an electrical case (14) to be applied to a wall and with means (23) for visualizing the inclination of the electrical case with respect to the floor.

## Description

The present invention concerns the field of electrical systems in building work, and more specifically it refers to a device for the application of electrical cases to a wall.

As known, the steps of installation and renovation of an electrical system can comprise the laying by flush mounting into the walls of electric connection cases.

Once the positioning of the case on the rough wall (or without plaster, in the case of renovation) has been decided it is necessary to demolish the part of wall that has to be occupied by the case.

Then the filler material (mortar or another equivalent material) is laid on the part of wall demolished and afterwards the case is positioned. When the filler material has solidified, the case is locked stably and the finishing operations in the laying of the plaster can be carried out.

The correct positioning of the case in the seat formed in the wall is not simple. Firstly, it is necessary to correctly centre the case in the seat. This is not always easy, since possible references, like for example lines drawn on the wall surface, can be covered by the mortar for fixing the case. Moreover, it is necessary for the case to be arranged with the correct horizontal orientation, both parallel and perpendicular to the wall surface. In order to obtain the horizontal position of the case a level is generally used. The level, in an approximate way, is rested on the top part of the case if there is sufficient space.

However, it is clear that such an operation is not precise, since the level can possibly be rested on the case only after the case has been arranged on the wall, and therefore any following shifts subsequent movements of the same case cause the movement of the fixing mortar, with the risk of jeopardising the fixing action of the mortar itself.

In addition to the level, complicated reference systems are used with plumb lines marks on the wall etc. that, overall, extend the time for the installation of the cases.

Another problem encountered in the arrangement of the electrical cases on a wall is that of the correct distance of the bottom of the case from the rough wall surface, i.e. the alignment of the edges of the case with respect to the last layer of plaster that is applied to the wall.

Indeed, depending on how much mortar is applied in the wall area on which the case has to be fixed, and on how much pressure is applied on the case, the distance of the edge of the case from the rough wall surface can vary substantially. An incorrect distance can make the case project from the last layer of plaster, or else it can lead to sink the case inside the plaster itself.

The object of the present invention is to provide a device that allows the application of electrical cases to a wall in an accurate, precise and quick manner.

A further object of the present invention is to provide a device for the application of electrical cases to a wall that can also be used by untrained staff.

These and other objects, which shall become clearer hereafter, are achieved with a device for the application of electrical cases to a wall, as specified in the appended claim 1.

The characteristics and advantages of a device according to the present invention will be made more apparent from the following description of an embodiment, given as a non-limiting example with reference to the appended drawings, in which:
- figure 1 represents an axonometric view of a device according to the invention with a case to be arranged on a wall applied;
- figure 2 represents an exploded axonometric view of the device of figure 1;
- figure 3 represents a section view from above of the device of figure 1;
- figure 4 represents a side section view of the device of figure 1;
- figures 5a, 5b represent two orthogonal schematic views (frontal and side views respectively) of the case to be arranged on a wall with shown the wrong slant angles the case can assume during the positioning on the wall.

With reference to the above figures, a device according to the invention comprises a frame 11 having a substantially flat central portion 12 surrounded by raised edges. On such a central portion there are attaching means 13 for the reversible attachment of an electrical case 14 to be fixed to a wall. The case 14, when fixed to the frame 11, is in contact with the outer face 12a of the central portion 12, i.e. the face to be pointed towards the wall.

In the preferred embodiment, the attaching means 13 comprise two sliders 15 able to translate along guide means 16, such as for example a longitudinal guide defined on the central portion 12.

Such a longitudinal guide 16 is formed, in this example, by a first longitudinal through slit 17 provided on the central portion 12 of the frame 11, and from a track-element 18 with C-shaped cross section, equipped with a second longitudinal through slit 19. Such a track-element 18 is fixed onto the inner face 12b of the central portion 12 (i.e. the face visible by the user of the device) with the second longitudinal through slit 19 substantially lying over the first slit 17. On the border of the track-element 18 there is an indentation 18a that defines the positioning references for the sliders 15 along the guide 16.

The length of the guide 16 (and therefore also the width of the frame 11) is greater than the maximum width of the cases that can be fixed to a wall with such a device. Furthermore, the guide 16 extends along the centre of the frame 11 for most of its length. The height of the frame is also preferably greater than the maximum height of the cases that can be fixed to a wall with such a device. The frontal outline of the case with the maximum usable size with the device is thus contained within the profile defined by the frame 11.

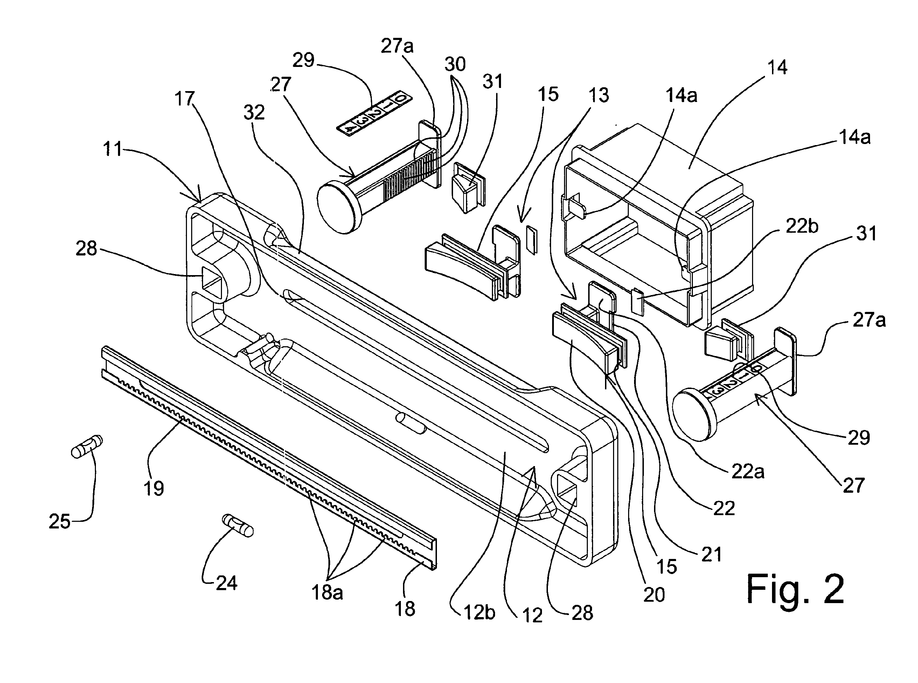

As can clearly be seen in figure 2, each slider 15 consists, in this embodiment, of a reference-element 20 for the user's fingers, of a pair of grooves 21 defined around the reference-element 20 suitable for slidably coupling with the guide 16, and of a member 22 to be locked with a corresponding portion of the case 14 that extends from a connection stem arranged through the first slit 17 to the reference-element 20. The reference-element 20 is available on the inner face 12b of the central portion 12 of the frame.

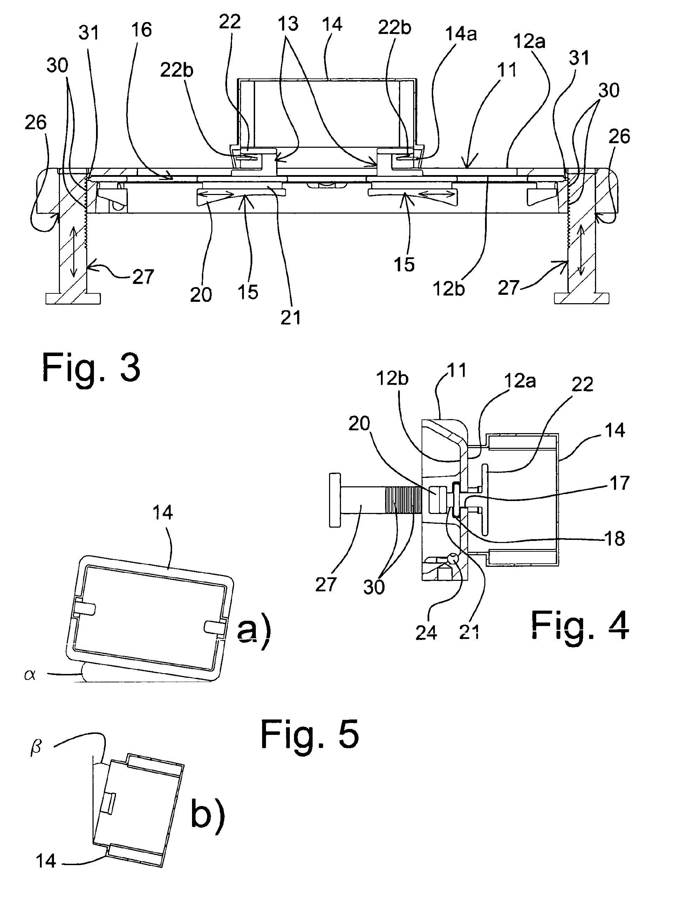

Each locking member 22 consists of a plate-shaped abutment 22a suitable for abutting with an end against the corresponding inner side of the case 14, and of an elastic element 22b arranged between the flat portion of the plate-shaped abutment 22a and a tongue 14a that projects perpendicularly from the inner side of the case 14, thus forcing the same case to abut with its edge on the frame 11, as can clearly be seen in figure 3. Such a tongue 14a has the purpose of allowing the attachment of the cover of the case after application to a wall.

The locking members 22 allow the case 14 to be fixed to the frame 11. The sliders 15, to which the locking members 22 are fixedly connected, form, together with the guide means 16, means for adjusting the distance of the same locking members 22 in order to allow adaptation to different sized electrical cases.

According to the invention, on the frame 11 there are means 23 for visualizing the inclination of the electrical case 14 with respect to the floor.

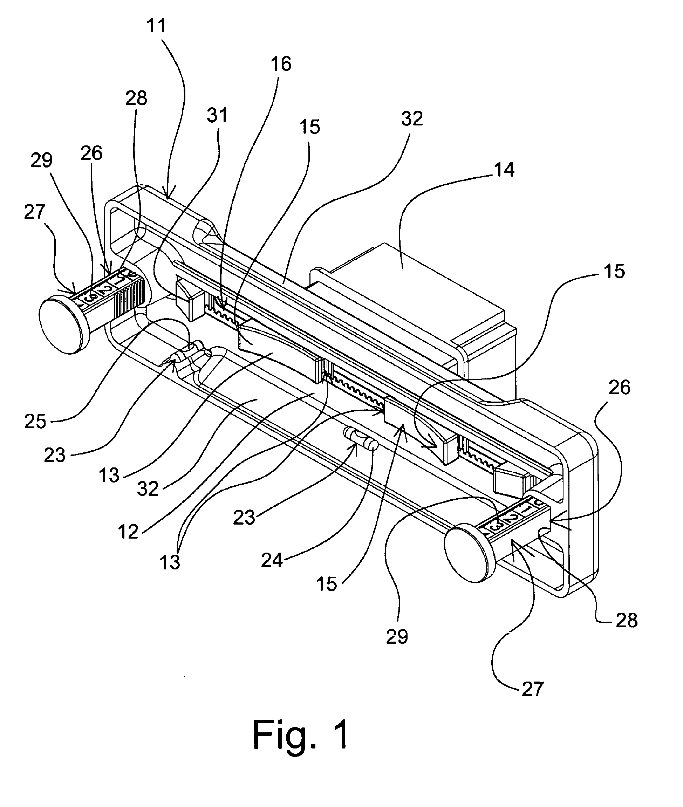

In particular, in this embodiment, as can clearly be seen in figure 1, such means for visualizing the inclination 23 comprise a level 24 fixed substantially in the longitudinal center-line of the frame 11, to determine the lateral inclination of the case with respect to its own front plane (that is a plane parallel to the plane defined by edges of the case opening). In regard to this, see the scheme of figure 5a, wherein the lateral inclination angle of the case is indicated by the letter α.

The visualizing means 23 comprise a further level 25 to determine the frontal inclination of the case with respect to an own lateral plane (that is a forward or backward inclination of the case with respect to a plane parallel to the planes defined by the sides of the case. In regard to this, see the scheme of figure 5b, wherein the frontal inclination angle of the case is indicated by the letter β.

As is clear, the means 23 for visualizing the inclination of the electrical case 14 with respect to the floor allow an estimation of the inclination and therefore they can also be considered as means for measuring such an inclination.

Advantageously, the device also comprises adjustable spacing means 26 of the frame from the wall. In this embodiment, such means 26 comprise two further sliders 27 in the form of two pins with square section slidably arranged through holes 28 formed nearby the side ends of the frame 11. Such holes 28 extend perpendicular to the central portion 12.

Such further sliders 27 project from the holes 28, extending towards the wall on which the case is to be applied and have, on the top face, indicators 29 of their relative position with respect to the holes 28, i.e. indicators that measure the distance between the abutment end 27a of the further sliders against the wall and the frame 11.

On the side walls of each further slider 27 there are transversal grooves 30 suitable for coupling with a pawl 31 associated with the frame. Grooves 30 and respective pawls 31 allow discretized movement of the further sliders 27.

The operation of the device is the following. The device is positioned by resting the outer face of the frame at the wall portion in which one wishes to fix the case and the edges of the frame are used as rectilinear references to mark the limits of the wall area to be demolished. This operation allows the area to be demolished to be defined in a quick and precise manner.

Therefore, once the area of wall has been demolished, the electrical case is taken and it is rested with the front edges on the outer face of the frame. The sliders 15 are translated laterally on the guide 16 until the locking members 22 abut against the inner walls of the case, positioning the plate-shaped abutments 22a behind the tongues 14a with the interposition of the elastic elements 22b. In this way, the case remains fixed on the frame 11.

At this point, the further sliders 27 are translated by the desired extent to suitably adjust the distance of the frame from the crude wall. At this point, the case, supported by the device, is arranged on the demolished wall, where there is the still wet fixing mortar. The positioning of the case is carried out taking into account the horizontality of the case (lateral and frontal inclination), measured through the levels 24 and 25.
Thanks to bevels 32 defined on the bottom and top edges of the frame 11, it is possible to apply further mortar on the top and bottom part of the case, thus allowing more accurate masonry.

The fact that the sliders 15 for attaching the case to the frame can translate on a longitudinal guide that extends for most of the frame, allows the same case to be positioned at the ends of the frame, thus allowing the positioning of the case even in corner areas of a room. If, indeed, the case were fixed exclusively on the centre of the frame, the ends thereof, knocking against the corner wall, would prevent the case from being positioned against the corner itself. Therefore, according to what has been stated, in this configuration, the means for adjusting the longitudinal distance of the locking members also define lateral positioning means of the case with respect to the frame.

It is clear how the invention thus conceived fulfils the objects that it has been set. Indeed, the device that has been devised allows the case to be positioned according to the correct horizontal arrangement and according to the correct distance from the wall. The use of the device is very simple and the operations connected to the application to a wall of the electrical case are extremely simplified compared to the state of the art.

Moreover, the device allows the case to be positioned in any area of a wall, even close to a corner. Furthermore, the structure of the device allows the references that define the part of wall to be demolished to apply the case to be marked out quickly and easily, favouring quick work and allowing demolition limited to just the necessary part.

The device thus conceived can be subject to numerous modifications and variants, all of which are covered by the invention; moreover, all of the details can be replaced by other technically equivalent elements, without for this reason departing from the scope of protection of the invention itself.

For example, the attaching means for the reversible attachment of the electrical case could be made in a different way to the aforementioned opposite locking members. A possible variant of these can also consist of one (or more) locking member able to be fixed to the case for example through pincer means.

Such a locking member (or members) can be moved in the frame by translation along a guide or, for example, simply by removal from the frame and reinsertion in a predetermined housing seat (there can be a series of predetermined housing seats that allow discretized positioning).

Furthermore, between two opposite locking members for fixing the case to the frame, there can be an elastic element of greater length than the maximum width of the cases able to be fixed to a wall with such a device. Such an elastic element keeps such members spaced apart and forces them to push against the inner walls of the case, achieving a further constriction.

Furthermore, the guide means of the locking members can, like in the case described, consist of a single guide, or else they can for example consist of many guides, one for each locking member.

Furthermore, the adjustable spacing means of the frame from the wall can also be made in a different way to what has been described. For example, instead of the pins with square section that can translate in holes, elements can be used that are extendable in the spacing direction (like for example telescopic bodies), or else, for example, spacer bodies of fixed length can be used that are able to be replaced according to needs with bodies of shorter or greater length.

It is clear how it is possible to provide a kit formed from the device according to the invention and from electrical cases designed "ad hoc" in order to be able to be fixed to the device, i.e. cases that have connection portions with a shape dedicated to the coupling with the attaching means 13 of the device. For example, a case included in such a kit can be provided with recesses on the borders in which dedicated locking members of the device are reversibly snap-inserted to allow the attachment of the case.

In practice, the materials used, provided that they are compatible with the specific use, as well as the sizes, can be whatever according to the requirements and the state of the art.

Where the characteristics and techniques mentioned in any claim are followed by reference symbols, these have been included, as an example, for the sole purpose of increasing the intelligibility of the claims and consequently they have no limiting effect upon the interpretation of each element that they identify.

## Claims

1. A device for the application of electrical cases to a wall **characterised in that** it comprises a frame (11) with attaching means (13) for the reversible attachment of an electrical case (14) to be applied to a wall and with means (23) for visualizing the inclination of the electrical case with respect to the floor.

2. The device according to claim 1, **characterised in that** said visualizing means (23) comprise at least one level (24) to determine the lateral inclination of the case (14).

3. The device according to claim 2, **characterised in that** said visualizing means (23) comprise at least one further level (25) to determine the frontal inclination of the case (14).

4. The device according to any of the previous claims, **characterised in that** said attaching means (13) for the reversible attachment of the electrical case (14) comprise opposite locking members (22) to be locked with corresponding opposite portions of the electrical case (14) and means (15, 16) for adjusting the longitudinal distance of said locking members (22) to allow adaptability to different sized electrical cases.

5. The device according to claim 4, **characterised in that** said means (15, 16) for adjusting the longitudinal distance of said locking members (22) comprise a pair of sliders (15) slideable along longitudinal guide means (16) provided on said frame (11), said locking members (22) being defined on said sliders (15).

6. The device according to claim 5, **characterised in that** said longitudinal guide means (16) comprise a longitudinal guide defined through the central portion (12) of said frame (11), said longitudinal guide comprising a first longitudinal slit (17) formed through said central portion (12) of said frame (11) and a track-element (18) with C-shaped cross section, traversed by a second longitudinal slit (19), said track-element (18) being fixed onto the inner face (12b) of said frame (11) with said second longitudinal slit (19) substantially lying over said first slit (17), said track-element (18) comprising an indentation (18a) defining the positioning references for said sliders (15) along the same longitudinal guide (16).

7. The device according to claim 5 or 6, **characterised in that** said longitudinal guide means (16) comprise a longitudinal guide defined on said frame (11), the length of said longitudinal guide (16) being greater than the maximum width of the cases to be fixed to a wall with the same device, said longitudinal guide (16) extending along the centre of the frame (11) for most of the length of the frame (11) itself.

8. Device according to one of claims 5 to 7,
**characterised in that** each of said sliders (15) comprises
- a reference-element (20) for the fingers of the user made available on the inner face (12b) of said frame (11),
- at least one groove (21) defined on said reference-element (20), for slidably coupling with said longitudinal through guide (16),
- a member (22) for locking with a corresponding portion of said case (14) that extends from a connection stem to said reference-element (20) arranged through said longitudinal guide (16).

9. The device according to claim 8, **characterised in that** each locking member (22) consists of a plate-shaped abutment (22a) for abut with an end against the corresponding inner side of the case (14), and of an elastic element (22b) arranged between the flat portion of said plate-shaped abutment (22a) and a tongue (14a) projecting perpendicularly from the inner side of the case (14), thus forcing the case itself (14) to abut with its own edge on the frame (11).

10. The device according to any of the previous claims, **characterised in that** it comprises adjustable spacing means (26) for spacing the frame (11) from the wall on which the electrical case is to be applied.

11. The device according to claim 10, **characterised in that** said adjustable spacing means (26) comprise at least one further slider (27) restrained to move on said frame (11) according to a direction substantially perpendicular to the bottom of the electrical case (14) when applied to the device, said further slider (27) having an end portion (27a) for abutting against the wall on which the case (14) is to be fixed.

12. The device according to claim 11, **characterised in that** said at least one further slider (27) comprises transversal grooves (30) for coupling with a pawl (31) associated with said frame (11), said grooves (30) with said pawl (31) allowing discrete movement of the further sliders (27).

13. Device according to claim 11 or 12, **characterised in that** said at least one further slider (27) comprises at least one indicator (29) of the distance between said abutment end (27a) of the further slider (27) and the frame (11).

14. The device according to any of claims 11 to 13,
**characterised in that** said adjustable spacing means (26) comprise two of said further sliders (27) in the form of pins slidably arranged through corresponding holes (28) formed nearby the side ends of said frame (11), said holes (28) extending perpendicularly to the central portion (12) of the frame (11).

15. The device according to any of the previous claims, **characterised in that** said frame (11) has a front outline greater in size than the front shape of the case (14) of maximum size that can be used with the same device, the profile of said case (14) being contained inside the front shape of said frame (11) during use of the device.

16. The device according to one of the previous claims, **characterised in that** it comprises lateral positioning means (15, 16) of the case with respect to the frame (11).

17. The device according to claim 16, **characterised in that** said lateral positioning means (15, 16) of the case with respect to the frame (11) comprise at least one locking member (22) of the case to the frame (11) and longitudinal guide means (16) for said locking member (22) provided on said frame (11) for allowing the positioning of said case (14) nearby the side ends of said frame (11).

18. Kit **characterised in that** it comprises a device according to any of the previous claims and an electrical case equipped with at least one connection portion having a shape dedicated to the coupling with said attaching means (13) to the frame (11).
